# EUROPEAN PATENT APPLICATION

(11) **EP 4 757 018 A1**
(43) Date of publication of application: **10.06.2026**
(21) Application number: 24857761.1
(22) Date of filing: 03.04.2024
(51) Int. Cl.: H01M 50/179, H01M 50/531

(54) **BATTERY CELL, MANUFACTURING METHOD THEREFOR, BATTERY, AND ELECTRICAL APPARATUS**

(30) Priority: 30.08.2023 CN 202311103985
(71) Applicant: Contemporary Amperex Technology Co., Limited, Ningde, Fujian 352100 (CN)
(72) Inventor: WU, Kai, Ningde, Fujian 352100 (CN); YANG, Zhenfei, Ningde, Fujian 352100 (CN); WANG, Zejiang, Ningde, Fujian 352100 (CN)
(74) Representative: Gong, Jinping
(86) International application number: PCT/CN2024/085817
(87) International publication number: WO 2025/044211

(57) **Abstract**

Embodiments of the present application provide a battery cell and a manufacturing method thereof, a battery, and an electric apparatus. The battery cell includes: a housing (1), including a first wall (13); an electrode assembly (3), disposed within the housing (1), where the electrode assembly (3) includes an electrode body (31) and a first tab (32), and the first tab (32) is led out from the electrode body (31); and a first current collector (4), configured to electrically connect the first tab (32) to the first wall (13), where the first current collector (4) is connected to an inner surface of the first wall (13) by a first weld seam (41), and the first weld seam (41) does not penetrate to an outer surface of the first wall (13).

## Description

### CROSS-REFERENCE TO RELATED APPLICATIONS

This disclosure is based on Chinese Patent Application No. 202311103985.6, filed on August 30, 2023, and claims the priority thereof, and the content of the disclosure is incorporated herein in its entirety by reference.

### TECHNICAL FIELD

The present application relates to the field of battery technologies, and more particularly, to a battery cell and a manufacturing method thereof, a battery, and an electric apparatus.

### BACKGROUND

In recent years, new energy vehicles have experienced rapid development. In the field of electric vehicles, power batteries serve as an irreplaceable power source for electric vehicles. With the widespread promotion of new energy vehicles, the demand for power battery products is increasing. Batteries, as a core component of new energy vehicles, have high requirements for operational reliability.

However, improving the reliability of batteries during use has been a persistent challenge in the industry.

### SUMMARY

The purpose of the present application is to improve the operational reliability of batteries.

According to a first aspect of the present application, a battery cell is provided, including:
a housing, including a first wall;
an electrode assembly disposed within the housing, where the electrode assembly includes an electrode body and a first tab, and the first tab is led out from the electrode body; and
a first current collector, configured to electrically connect the first tab and the first wall, where the first current collector is connected to an inner surface of the first wall by a first weld seam, and the first weld seam does not penetrate to an outer surface of the first wall.

In the battery cell of this embodiment, the first current collector is welded to the first wall from an inner side of the first wall, and the first weld seam does not penetrate the outer surface of the first wall. As compared with welding from the outer side of the first wall and melting through the entire thickness thereof, even if cracks appear at the first weld seam after welding and cooling, the weld cracks are located on the inner side of the first wall, still preventing the electrolyte from leaking through the weld seam to the outside of the first wall, thereby improving the reliability of the battery cell during use. Particularly, when the first current collector and the first wall are made of different materials, after cooling, the significant difference in thermal expansion coefficients of the two materials causes inconsistent shrinkage of the two materials, making weld cracks more likely. The first weld seam being located on the inner side of the first wall can better address the electrolyte leakage issue, thus reducing material requirements for the first current collector and the first wall.

In some embodiments, the first weld seam penetrates the first current collector.

This embodiment facilitates the welding operation and can reduce process complexity, particularly when the first current collector is thin, thereby enhancing the connection strength between the first current collector and the first wall, preventing fall-off during long-term operation or vibration of the battery cell, improving electrical connection reliability, and ensuring the operational performance of the battery cell.

In some embodiments, at least a portion of the first current collector is sandwiched between the first tab and the first wall.

This embodiment sandwiches the first current collector between the first tab and the first wall, enabling reliable electrical connection after welding. Even if the first weld seam falls off during long-term use or vibration of the battery cell, the first current collector can maintain reliable contact with the first wall. Additionally, due to the limiting effect of the first wall, the first current collector can also maintain reliable contact with the first tab. Therefore, this structure can enhance the reliability of the electrical connection between the first tab and the first wall, thereby improving the performance and reliability of the battery cell.

In some embodiments, the first weld seam is spaced from an outer edge of the first current collector.

This embodiment facilitates increasing the width of the first weld seam and can allow the first weld seam to be designed with different trajectories to enhance welding strength and reliability. In addition, during laser welding, the welding device can emit laser vertically downward, reducing welding process complexity and facilitating the formation of desired trajectories by adjusting the laser position. Additionally, during welding, the first wall can support the first current collector, eliminating the need for additional welding fixtures.

In some embodiments, the first weld seam is formed by welding the outer edge of the first current collector to the inner surface of the first wall.

This embodiment facilitates determining the trajectory of the first weld seam, and performing welding directly along the outer edge of the first current collector can reduce process complexity. Moreover, during welding, the first wall can support the first current collector, eliminating the need for additional welding fixtures.

In some embodiments, the first wall has a body portion and a connecting portion, the connecting portion protrudes toward the first current collector relative to the body portion along a thickness direction of the first wall, the connecting portion comes into contact with the first current collector, and the first weld seam is formed by welding the first current collector to the connecting portion.

In this embodiment, the connecting portion can be provided abutting against the first current collector on the first wall, to facilitate welding when the first wall and the first current collector are spaced apart. This helps to design the first current collector with a uniform thickness, reducing manufacturing complexity of the first current collector.

In some embodiments, the first wall includes a recessed portion, an inner side wall of the connecting portion and an inner surface of the body portion define the recessed portion, at least a portion of the first current collector is located within the recessed portion, and the first weld seam is formed by welding the outer edge of the first current collector and the inner side wall of the connecting portion.

This embodiment places the first current collector within the recessed portion, avoiding additional space occupation in the height direction of the battery cell, reducing the height of the battery cell to improve energy density, and reducing the area of the first current collector to save material.

In some embodiments, along the thickness direction of the first wall, a surface of the first current collector facing toward the electrode assembly is closer to the electrode assembly than an inner surface of a bottom wall of the connecting portion.

In this embodiment, during the assembly of the battery cell, when the first tab is welded to the first current collector, even if the outer edge of the first tab extends beyond the outer edge of the first current collector, the first current collector can maintain good contact with a flattened surface of the first tab, improving the reliability of the electrical connection between the first current collector and the first tab, thereby enhancing the performance and reliability of the battery cell.

In some embodiments, the first weld seam is formed by welding the first current collector to a bottom wall of the connecting portion.

This embodiment can allow the bottom wall of the connecting portion to provide support during welding, making the welding process more stable and reliable, eliminating the need for additional support fixtures, and reducing positioning requirements for the first current collector.

In some embodiments, the first current collector includes a first portion and a second portion connected to each other, the first portion is configured to be welded to the first wall, and the second portion is configured to be welded to the first tab.

In this embodiment, different portions of the first current collector are welded to the first wall and the first tab, facilitating welding operations and ensuring welding reliability as the weld seams of the two portions do not affect each other.

In some embodiments, a thickness of the first portion is less than a thickness of the second portion.

In this embodiment, with the thickness of the first portion being less than the thickness of the second portion, the first portion is penetrated more easily when the first portion is penetrated to weld to the first wall, reducing the power required for laser welding and reducing the amount of first current collector material incorporated into the first wall during welding, thereby reducing the risk of cracks at the first weld seam.

In some embodiments, the thickness of the first portion is less than a thickness of a welding region of the first wall and the first portion.

In this embodiment, with the thickness of the first portion being less than the thickness of the welding region of the first wall and the first portion, the first portion is penetrated more easily when the first portion is penetrated to weld to the first wall, reducing the power required for laser welding. In addition, the thicker first wall can prevent the first weld seam from penetrating the outer surface of the first wall during welding, reducing requirements for welding precision, and lowering the risk of electrolyte leakage in the battery cell.

In some embodiments, the first current collector and the first wall are made of different materials.

If the first current collector and the first wall are made of different materials, the significant difference in thermal expansion coefficients of the two materials after welding and cooling causes inconsistent shrinkage of the two materials, making weld cracks more likely. Even if cracks appear at the first weld seam, the cracks are located on the inner side of the first wall, still preventing the electrolyte from leaking through the weld seam to the outside of the first wall, improving the reliability of the battery cell during use, and reducing material selection requirements for the first current collector and the first wall.

In some embodiments, the first current collector is a negative electrode current collector, the first current collector includes a copper material, and the first wall includes a steel material.

In this embodiment, during welding to form the first weld seam, copper atoms from the molten first current collector enter the first wall. Due to the significant difference in thermal expansion coefficients between copper and steel, inconsistent shrinkage of the two materials after cooling makes weld cracks more likely. However, the weld cracks are located inside the first wall, still preventing the electrolyte from leaking through the weld seam to the outside of the first wall, thereby improving the reliability of the battery cell during use.

In some embodiments, the first wall has a second opening, the second opening being configured to allow a laser for welding the first current collector and the first tab to pass through.

During assembly, the first current collector is pre-welded to the first wall, and the electrode assembly is then placed into the housing. At this point, the first tab and the first current collector are not yet welded. By providing the second opening on the first wall, the first current collector and the first tab can be conveniently welded.

In some embodiments, the second opening shares the same central axis with the first wall, and the first weld seam is located outside the second opening.

In this embodiment, the second opening is provided in a central region of the first wall, reducing the impact on the strength of the first wall and allowing flexible design of welding trajectories when welding the first current collector and the first tab. This can enable a fully enclosed welding trajectory and help to improve the welding reliability and current flow capacity. Additionally, positioning the first weld seam outside the second opening can allow welding of the first current collector and the first wall near the outer edge in pre-welding the first current collector and the first wall, ensuring a more reliable connection. Since the first current collector is thin, this can prevent deformation of the edge region of the first current collector or separation of the first current collector from the first wall under external forces.

In some embodiments, a second weld seam is formed by welding the first current collector to the first tab, the second weld seam not extending beyond a projection region of the second opening on the first current collector.

This embodiment can facilitate welding with a laser perpendicular to the first current collector during welding, eliminating the need to adjust the laser emission angle, reducing process complexity, and improving welding reliability and strength.

In some embodiments, the battery cell further includes a sealing member, where the sealing member covers the second opening.

This embodiment uses the sealing member to seal the second opening after welding the first tab and the first current collector through the second opening, preventing electrolyte leakage.

In some embodiments, the sealing member is provided with a score, and the score is configured to be broken when an internal pressure of the battery cell exceeds a preset threshold, to release pressure.

In this embodiment, the sealing member serves as a pressure relief component. When the internal pressure of the battery cell exceeds the preset threshold, gas flows toward the sealing member through a first through-hole, passing through a second through-hole in the center of the first current collector and acting on the inner surface of the sealing member. The score, being thinner and weaker, breaks to release pressure, improving the safety of the battery cell during operation. Moreover, the pressure relief component's activation pressure can be flexibly set by adjusting the score's extension path and depth, allowing precise control of the activation pressure.

In some embodiments, the sealing member is welded to the first wall to form a third weld seam, and the third weld seam is configured to be broken when an internal pressure of the battery cell exceeds a preset threshold, to release pressure.

In this embodiment, the sealing member serves as a pressure relief component. When the internal pressure of the battery cell exceeds the preset threshold, gas flows toward the sealing member through the first through-hole, passing through the second through-hole in the center of the first current collector and acting on the inner surface of the sealing member, causing the sealing member to bulge outward, increasing stress at the third weld seam, and breaking the third weld seam to release pressure, thereby improving the safety of the battery cell during operation.

Moreover, the sealing member is connected to the first wall by welding, with the weak portion being the third weld seam. The minimum thickness of the sealing member is the thickness of the plate itself, ensuring high thickness consistency across different regions, thereby making it easier to ensure the activation pressure of the sealing member. In addition, no localized thinning to form a score is required, reducing stress concentration and grain fracture issues. The steel at the weld seam can achieve higher strength than the base material, making it less prone to damage and allowing for breakage only under high gas pressure to release pressure.

In some embodiments, the third weld seam is spaced from an outer edge of the sealing member.

This embodiment facilitates increasing the width of the third weld seam to achieve the required activation pressure for the sealing member and improve welding strength and reliability. In addition, during laser welding, the welding device can emit laser vertically downward, reducing welding process complexity.

In some embodiments, a region of the first wall near the second opening is entirely recessed inward to form a first groove, and at least a portion of the sealing member is located within the first groove.

This embodiment can reduce the protrusion height of the sealing member relative to the first wall by providing the first groove, lowering the risk of deformation or damage to the sealing member caused by external forces such as collisions, thereby improving the pressure relief reliability of the battery cell. Additionally, when the housing is placed upside down with the sealing member facing downward for electrolyte filling, the housing can be placed more stably.

In some embodiments, the third weld seam is formed by welding an outer edge of the sealing member to a bottom wall of the first groove.

This embodiment facilitates determining the trajectory of the third weld seam, and performing welding directly along the outer edge of the sealing member can reduce process complexity. In addition, a portion of the third weld seam accumulates in a corner region formed between the outer edge of the sealing member and the bottom wall of the first groove, improving welding reliability and strength.

In some embodiments, a bottom wall of the first groove is provided with a second groove, the sealing member is disposed within the second groove, and the third weld seam is formed by welding an outer edge of the sealing member to a side wall of the second groove.

This embodiment places the sealing member within the second groove, allowing the sealing member to be further recessed relative to the outer surface of the first wall, and preventing deformation or damage of the sealing member caused by external forces such as collisions, thereby improving the pressure relief reliability of the battery cell.

In some embodiments, an outer periphery of the sealing member is provided with a thinned portion, and the thinned portion overlaps with the first wall.

This embodiment provides the thinned portion at the outer periphery of the sealing member, facilitating penetration of the thinned portion during welding, and improving welding strength and reliability. In addition, the locally thinned edge and thicker central portion of the sealing member can enhance overall strength, preventing deformation due to gas production inside the battery cell.

In some embodiments, a third groove is provided at a region near an outer edge of an inner surface of the sealing member, so as to form the thinned portion at the outer edge of the sealing member.

This embodiment facilitates cooperation between the thicker central portion of the sealing member and the second opening for positioning, eliminating the need for additional positioning during welding the sealing member, preventing misalignment of the sealing member during welding, and improving welding reliability.

In some embodiments, the sealing member is provided with a reinforcing rib, and the reinforcing rib protrudes toward the first current collector.

This embodiment can enhance the overall strength of the sealing member by providing the reinforcing rib on the sealing member, preventing deformation caused by external forces or gas production inside the battery cell. In addition, the reinforcing rib protruding toward the first current collector can prevent deformation or damage to the sealing member caused by external forces to the reinforcing rib such as collisions.

In some embodiments, the electrode assembly further includes a second tab, and the second tab and the first tab are led out from two ends of the electrode body respectively.

This embodiment has the second tab and the first tab led out from the two ends of the electrode body respectively, conveniently utilizing the second opening on the first wall to weld the sealing member, and resulting in a simple structure. Additionally, this can increase the connection area between the tab on each side and the current collector, improving current flow capacity and optimizing the performance of the battery cell.

In some embodiments, the battery cell further includes an electrode terminal and a second current collector, where the housing further includes a side wall and a second wall disposed opposite the first wall, the electrode terminal is insulatedly disposed on the second wall, and the electrode terminal is electrically connected to the second tab via the second current collector.

This embodiment provides the electrode terminal on the second wall of the housing, allowing convenient electrical connection to the electrode terminal and the end cap respectively when the second tab and the first tab are led out from the two ends of the electrode body.

In some embodiments, the housing includes a container and an end cap, the end cap is fixedly connected to a first opening of the container, and the first wall is the end cap.

This embodiment can allow the first current collector and the end cap to be pre-welded to form an end cap assembly during battery cell assembly, unlike the conventional method of welding an end cap to a current collector from the outside after the end cap is installed. In addition, even if cracks appear at the first weld seam after welding and cooling, the weld cracks are located on the inner side of the end cap, still preventing the electrolyte from leaking through the weld seam to the outside of the end cap, improving the reliability of the battery cell during use. Particularly when the first current collector and the end cap are made of different materials, after cooling, the significant difference in thermal expansion coefficients of the two materials causes inconsistent shrinkage of the two materials, making weld cracks more likely. The first weld seam being located on the inner side of the end cap can better address the electrolyte leakage issue, reducing material requirements for the first current collector and the end cap. Additionally, pre-welding the first current collector and the end cap eliminates the need for welding operations inside the cavity of the housing, reducing welding difficulty and facilitating operation.

According to a second aspect of the present application, a battery is provided, including the battery cell of the above embodiments.

According to a third aspect of the present application, an electric apparatus is provided, including the battery cell and/or the battery of the above embodiments, and configured to provide electric energy to the electric apparatus.

According to a fourth aspect of the present application, a manufacturing method of a battery cell is provided, including:
providing components step: providing a container, an end cap assembly, and an electrode assembly, where the electrode assembly includes an electrode body and a first tab, the first tab is led out from the electrode body, the end cap assembly includes an end cap and a first current collector, the first current collector is connected to an inner surface of the end cap by a first weld seam, and the first weld seam does not penetrate to an outer surface of the end cap;
inserting electrode step: inserting the electrode assembly into the container through a first opening of the container;
end cap covering step: covering the first opening with the end cap assembly; and
electrical connection step: electrically connecting the first current collector to the first tab.

In the battery cell of this embodiment, the first current collector is welded to the end cap from an inner side of the end cap, and the first weld seam does not penetrate the outer surface of the end cap. As compared with welding from the outer side of the end cap and melting through the entire thickness thereof, even if cracks appear at the first weld seam after welding and cooling, the weld cracks are located on the inner side of the end cap, still preventing the electrolyte from leaking through the weld seam to the outside of the end cap, thereby improving the reliability of the battery cell during use. Particularly, when the first current collector and the end cap are made of different materials, after cooling, the significant difference in thermal expansion coefficients of the two materials causes inconsistent shrinkage of the two materials, making weld cracks more likely. The first weld seam being located on the inner side of the end cap can better address the electrolyte leakage issue, thus reducing material requirements for the first current collector and the end cap.

In some embodiments, the end cap has a second opening, and the electrical connection step includes:
welding the first current collector to the first tab by using a laser through the second opening.

In this embodiment, the second opening forms a passage for laser welding the first current collector and the first tab. Since the end cap and the first current collector are pre-welded to form the end cap assembly, during battery cell assembly, the end cap assembly is fit onto the first opening, with the first current collector and the first tab not yet welded at this point. By providing the second opening on the end cap, the first current collector and the first tab can be conveniently welded after the end cap assembly is installed.

In some embodiments, the end cap assembly further includes a sealing member, and after the electrical connection step, the manufacturing method further includes:
covering the second opening with the sealing member and welding the sealing member to the end cap to form a third weld seam.

In this embodiment, the second opening can be configured for welding the first tab and the first current collector, and after welding, the second opening is sealed by welding the sealing member to achieve sealing of the housing.

In some embodiments, after the end cap sealing step, the manufacturing method further includes:
connecting an outer edge of the end cap to the container at the first opening.

In this embodiment, the end cap can reliably seal the container, preventing the electrolyte from leaking at the connection between the end cap and the container.

### BRIEF DESCRIPTION OF DRAWINGS

To more clearly illustrate the technical solutions of the embodiments of the present application, the drawings required for the embodiments of the present application are briefly introduced below. It is apparent that the drawings described below are only some embodiments of the present application. Those of ordinary skill in the art can obtain other drawings based on these drawings without creative effort.
FIG. 1 is a schematic structural diagram of some embodiments of installing a battery in a vehicle according to the present application.
FIG. 2 is an exploded view of a first embodiment of a battery of the present application.
FIG. 3 is a cross-sectional view of some embodiments of a battery cell of the present application.
FIG. 4 is a schematic structural diagram of a side of a battery cell on which an end cap is located according to the present application.
FIG. 5 is a schematic structural diagram of a side of a battery cell on which an electrode terminal is located according to the present application.
FIG. 6 is a schematic structural diagram of some embodiments of an end cap.
FIG. 7 is a schematic structural diagram of a first embodiment of welding a first current collector to an end cap.
FIG. 8 is a schematic structural diagram of a second embodiment of welding a first current collector to an end cap.
FIG. 9 is a schematic structural diagram of a third embodiment of welding the first current collector to the end cap.
FIG. 10 is a schematic structural diagram of a first embodiment of welding a sealing member to an end cap.
FIG. 11 is a schematic structural diagram of a second embodiment of welding a sealing member to an end cap.
FIG. 12 is a schematic structural diagram of a third embodiment of welding a sealing member to an end cap.
FIG. 13 is a schematic structural diagram of some embodiments of a sealing member.
FIG. 14 is a schematic structural diagram of some other embodiments of a sealing member.
FIG. 15 is a schematic flowchart of some embodiments of a manufacturing method of a battery cell according to the present application.

In the drawings, the drawings are not drawn to actual scale.

### Description of reference signs:

100. battery cell;
1. housing; 1'. container; 11. first opening; 12. side wall; 13. first wall; 14. second wall;
2. end cap; 2'. end cap assembly; 20. body portion; 21. connecting portion; 22. second opening; 23. first groove; 24. second groove; 25. recessed portion;
3. electrode assembly; 31. electrode body; 311. first through-hole; 32. first tab; 33. second tab;
4. first current collector; 41. first weld seam; 42. second weld seam; 43. second through-hole; 44. first portion; 45. second portion;
5. sealing member; 51. third weld seam; 52. third groove; 53. thinned portion; 54. reinforcing rib;
6. second current collector; 7. insulating plate; 8. electrode terminal; 81. fourth groove; 82. electrolyte injection hole; 83. cover plate; 9. first insulating member; 10. second insulating member;
200. battery; 201. box assembly; 201A. box; 201B. first cover; 201C. second cover;
300. vehicle; 301. axle; 302. wheel; 303. motor; and 304. controller.

### DESCRIPTION OF EMBODIMENTS

The embodiments of the present application are described in further detail below with reference to the drawings and embodiments. The detailed descriptions and drawings of the following embodiments are used to illustrate the principles of the present application but cannot be used to limit the scope of the present application, that is, the present application is not limited to the described embodiments.

In the description of the embodiments of the present application, the term "multiple" refers to two or more (including two), similarly, "multiple groups" refers to two or more groups (including two groups), and "multiple pieces" refers to two or more pieces (including two pieces).

The present application uses terms such as "upper," "lower," "top," "bottom," "front," "rear," "inner," and "outer" to describe orientations or positional relationships for convenience of describing the present application, and not to indicate or imply that the referenced device must have a specific orientation, be constructed, or operated in a specific orientation, and thus cannot be construed as limiting the scope of protection of the present application.

Additionally, the terms "first," "second," and "third," are used for descriptive purposes only and cannot be understood as indicating or implying relative importance. "Vertical" is not strictly vertical but within an allowable error range. "Parallel" is not strictly parallel but within an allowable error range. The directional terms appearing in the following description refer to the directions shown in the drawings and do not limit the specific structure of the present application.

In the description of the present application, it should also be noted that, unless otherwise explicitly specified and limited, the terms "installation," "joining," and "connection" should be understood in a broad sense, for example, as a fixed connection, a detachable connection, or an integral connection; or as a direct connection or an indirect connection through an intermediary. For those of ordinary skill in the art, the specific meanings of the above terms in the present application can be understood based on specific circumstances.

The mention of "embodiment" herein means that a particular feature, structure, or characteristic described in connection with the embodiment may be included in at least some embodiments of the present application. The appearance of this phrase in various places in the specification does not necessarily refer to the same embodiment, nor is it an independent or alternative embodiment mutually exclusive with other embodiments. Those skilled in the art explicitly and implicitly understand that the embodiments described herein can be combined with other embodiments.

Currently, a battery cell typically includes a housing and an electrode assembly housed within the housing, and the housing is filled with an electrolyte. The electrode assembly is primarily formed by stacking or winding a first electrode plate and a second electrode plate with opposite polarities, typically with an insulating member, such as a separator, between the first electrode plate and the second electrode plate. The portions of the first electrode plate and the second electrode plate coated with active material form the body portion of the electrode assembly, while the portions not coated with active material form the first tab and the second tab, respectively. In the battery cell, the first electrode plate may be a positive electrode plate, including a positive electrode current collector and positive active material layers disposed on both sides of the positive electrode current collector. The positive electrode current collector may be a metal foil or a composite current collector. For example, as a metal foil, aluminum or stainless steel with silver surface treatment, stainless steel, copper, aluminum, nickel, carbon electrode, carbon, nickel, or titanium may be used. The composite current collector may include a polymer material base layer and a metal layer. The composite current collector may be formed by forming a metal material (aluminum, aluminum alloy, nickel, nickel alloy, titanium, titanium alloy, silver, or silver alloy) on a polymer material substrate (such as polypropylene, polyethylene terephthalate, polybutylene terephthalate, polystyrene, or polyethylene). The positive active material layer may include at least one of the following materials: lithium-containing phosphate, lithium transition metal oxide, and their respective modified compounds. However, the present application is not limited to these materials, and other conventional materials that can be used as positive active materials for batteries may also be used. These positive active materials may be used alone or in combination of two or more. The second electrode plate may be a negative electrode plate, including a negative electrode current collector and negative active material layers disposed on both sides of the negative electrode current collector. The negative electrode current collector may be a metal foil or a composite current collector. For example, as a metal foil, aluminum or stainless steel with silver surface treatment, stainless steel, copper, aluminum, nickel, carbon electrode, carbon, nickel, or titanium may be used. The composite current collector may include a polymer material base layer and a metal layer. The composite current collector may be formed by forming a metal material (copper, copper alloy, nickel, nickel alloy, titanium, titanium alloy, silver, or silver alloy) on a polymer material substrate (such as polypropylene, polyethylene terephthalate, polybutylene terephthalate, polystyrene, or polyethylene). The negative active material layer may use negative active materials known in the art for batteries. For example, the negative active material may include at least one of the following materials: artificial graphite, natural graphite, soft carbon, hard carbon, silicon-based materials, tin-based materials, and lithium titanate. Optionally, the first electrode plate may also be a negative electrode plate, and correspondingly, the second electrode plate is a positive electrode plate. The first tab and the second tab may be located at one end of the body portion or at opposite ends of the body portion, respectively. During the charging and discharging process of the battery cell, the positive active material and the negative active material react with the electrolyte, and the tabs connect to electrode terminals to form a current loop.

During operation, cylindrical battery cells may experience leakage from the housing, significantly affecting the operational reliability of the battery cell. Research has found that the primary cause of leakage is that, to achieve same-side electrode terminal extraction in battery cells, the housing is used as an electrode extraction portion, typically made of steel. The electrode assembly is formed by winding positive and negative electrode plates and a separator, with the base material of the negative electrode plate being copper foil. When the negative tab is extracted to the housing, the copper negative electrode current collector must be welded to the steel housing. Welding from the outside of the housing causes copper atoms to integrate into the weld seam. Due to the inconsistent thermal expansion coefficients of copper and steel, the weld seam is prone to cracking after cooling due to inconsistent shrinkage of the two materials.

To address this issue, one solution is to use a steel-copper composite current collector plate, welding the steel portion of the current collector plate to the housing and the copper portion to the negative tab. However, due to the inconsistent thermal expansion and thermal conductivity coefficients of copper and steel of the current collector plate, and the thinness and insufficient rigidity of the current collector plate, different thermal deformations during manufacturing of the current collector plate cause distortion. After welding of the current collector plate, secondary deformation may worsen, causing the entire current collector plate to become wavy, affecting subsequent assembly. Another solution involves internal welding, that is, welding the current collector plate to the side wall of the housing, but internal welding requires high equipment precision, which is not conducive to mass production.

Based on the shortcomings of the above solutions, the present application proposes a battery cell, including: a housing, including a first wall; an electrode assembly, disposed within the housing, where the electrode assembly includes an electrode body and a first tab, and the first tab is led out from the electrode body; and a first current collector, configured to electrically connect the first tab and the first wall, where the first current collector is connected to an inner surface of the first wall by a first weld seam, and the first weld seam does not penetrate to an outer surface of the first wall.

In the battery cell of this embodiment, the first current collector is welded to the first wall from an inner side of the first wall, and the first weld seam does not penetrate the first wall. As compared with welding from the outer side of the first wall and melting through the entire thickness thereof, even if cracks appear at the first weld seam after welding and cooling, the weld cracks are located on the inner side of the first wall, still preventing the electrolyte from leaking through the weld seam to the outside of the first wall, thereby improving the reliability of the battery cell during use. Particularly when the first current collector and the first wall are made of different materials, after cooling, the significant difference in thermal expansion coefficients of the two materials causes inconsistent shrinkage of the two materials, making weld cracks more likely. The first weld seam being located on the inner side of the first wall can better address the electrolyte leakage issue, thus reducing material requirements for the first current collector and the first wall.

The battery cell of the embodiments of the present application is applicable to batteries and electric apparatuses using such battery cells, and the battery is also applicable to the electric apparatus.

The battery of the embodiments of the present application can be used in electric apparatuses. The electric apparatus may be an electric scooter, an electric vehicle, a ship, or a spacecraft, such as an airplane, a rocket, a space shuttle, or a spaceship.

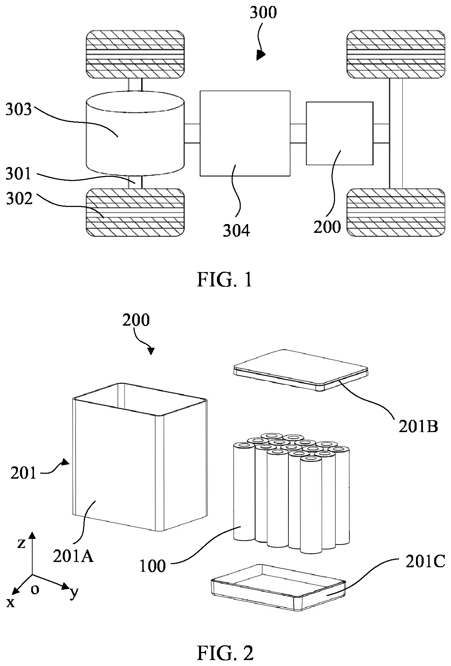

As shown in FIG. 1, the electric apparatus may be a vehicle 300, such as a new energy vehicle, and the new energy vehicle may be a battery electric vehicle, a hybrid electric vehicle, or an extended-range vehicle; or the electric apparatus may be a drone or a ship. Specifically, the vehicle 300 may include an axle 301, wheels 302 connected to the axle 301, a motor 303, a controller 304, and a battery 200. The motor 303 is configured to drive the axle 301 to rotate, the controller 304 is configured to control the operation of the motor 303, and the battery 200 may be disposed at the bottom, front, or rear of the vehicle 300 to provide electric energy for the motor 303 and other components of the vehicle.

As shown in FIG. 2, the battery 200 includes a box assembly 201 and a battery cell 100. In the battery 200, there may be one or more battery cells 100. If multiple battery cells 100 are provided, the multiple battery cells 100 may be connected in series, parallel, or series-parallel, where series-parallel refers to both series and parallel connections among the multiple battery cells 100. The multiple battery cells 100 may be first connected in series, parallel, or series-parallel to form a battery module, and multiple battery modules may then be connected in series, parallel, or series-parallel to form an integral unit housed within the box assembly 201. Alternatively, all battery cells 100 may be directly connected in series, parallel, or series-parallel, and an integral unit formed by all battery cells 100 is housed within the box assembly 201.

The box assembly 201 may be part of a battery pack, and the box assembly 201 is detachably installed in an electric apparatus. Alternatively, the box assembly 201 may be a space formed by structural components in the electric apparatus and configured for housing the battery cell 100. For example, when the battery cell 100 is used in a vehicle 300, the box assembly 201 is a space formed by a vehicle frame and configured for housing the battery cell 100.

The box assembly 201 is hollow inside to accommodate one or more battery cells 100, and depending on the shape, number, combination manner, and other requirements of the accommodated battery cells 100, the box assembly 201 may have different shapes and sizes. For example, the box assembly 201 may include: a box 201A, a first cover 201B, and a second cover 201C, with the box 201A having openings at two ends, and the first cover 201B and the second cover 201C configured to seal the openings at the two ends of the box 201A. In FIG. 2, based on the arrangement of multiple battery cells 100, the box 201A has a rectangular tubular structure. For ease of maintenance of the battery 200, the box assembly 201 is detachably installed in the electric apparatus.

The battery cell 100 may be a secondary battery, and the secondary battery refers to a battery cell 100 that can be recharged to reactivate the active material for continued use after the battery cell 100 is discharged.

The battery cell 100 may be a lithium-ion battery, sodium-ion battery, sodium-lithium-ion battery, lithium metal battery, sodium metal battery, lithium-sulfur battery, magnesium-ion battery, nickel-hydrogen battery, nickel-cadmium battery, or lead-acid battery, and the embodiments of the present application are not limited thereto.

For example, the battery cell 100 may be a cylindrical battery cell, a prismatic battery cell, a pouch battery cell, or a battery cell of another shape. Prismatic battery cells include square-shell battery cells, blade-shaped battery cells, or multi-prismatic batteries. Multi-prismatic batteries are for example hexagonal prismatic batteries, with no particular limitation in the present application.

The subsequent description takes a cylindrical battery cell 100 as an example but is also applicable to battery cells of other shapes. Multiple battery cells 100 may be arranged in an xoy plane perpendicular to a first direction z, with the multiple battery cells 100 arranged in a rectangular array along a second direction x and a third direction y, where the second direction x is perpendicular to the third direction y.

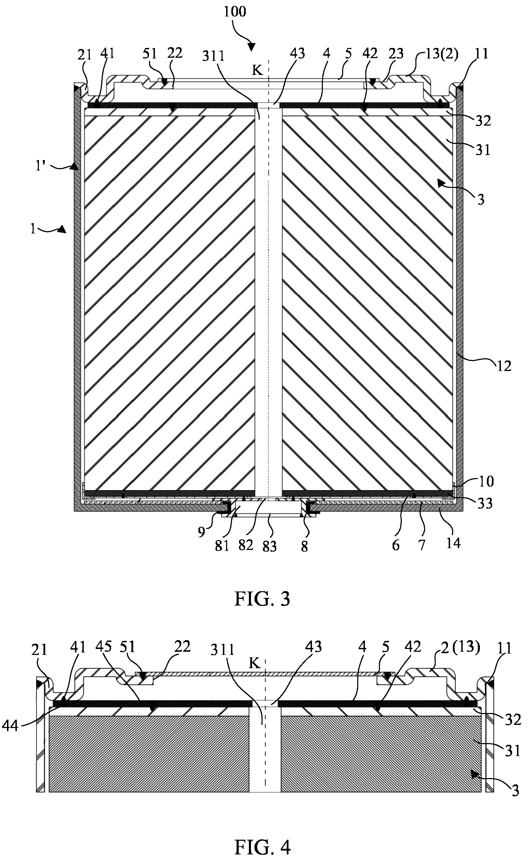

FIG. 3 is a cross-sectional view of some embodiments of a battery cell of the present application. In some embodiments, the battery cell 100 includes: a housing 1, including a first wall 13; an electrode assembly 3, disposed within the housing 1, where the electrode assembly 3 includes an electrode body 31 and a first tab 32, and the first tab 32 is led out from the electrode body 31; and a first current collector 4, configured to electrically connect the first tab 32 and the first wall 13, where the first current collector 4 is connected to an inner surface of the first wall 13 by a first weld seam 41, and the first weld seam 41 does not penetrate to an outer surface of the first wall 13.

The housing 1 adopts a thin-walled hollow structure to accommodate the electrode assembly 3 and an electrolyte. The housing 1 may be a steel shell, aluminum shell, composite metal shell (for example, copper-aluminum composite shell), or aluminum-plastic film. The housing 1 may include a side wall 12, a first wall 13, and a second wall 14, and the first wall 13 and the second wall 14 are connected to two ends of the side wall 12, respectively. The first wall 13 may be a bottom wall of the housing 1. From the perspective of component composition, the housing 1 includes a container 1' and an end cap 2, the end cap 2 being fixedly connected to a first opening 11 of the container 1', the first wall 13 being the end cap 2, and the side wall 12 being a side wall of the container 1'. The first wall 13 is the end cap 2. If an end of the container 1' opposite the first opening 11 is a closed structure, the second wall 14 may be integrally formed with the side wall 12. If the end of the container 1' opposite the first opening 11 has an opening, it may be sealed by an end cap, and the second wall 14 is also an end cap.

The electrode assembly 3 is a wound structure formed by winding a first electrode plate and a second electrode plate with opposite polarities around a winding axis K, the winding axis K is consistent with the first direction z, and typically, a separator is provided between the first electrode plate and the second electrode plate. For a cylindrical battery cell 100, the wound electrode assembly 3 may be cylindrical; and for a rectangular parallelepiped battery cell 100, the wound electrode assembly 3 may be flat.

The portions of the first electrode plate and the second electrode plate coated with active material form the electrode body 31, with a first through-hole 311 provided at the center of the electrode body 31 for accommodating electrolyte or serving as an exhaust passage during pressure relief. The portions of the first electrode plate and the second electrode plate not coated with active material form the first tab 32 and the second tab 33, respectively, with one of the first tab 32 and the second tab 33 being a negative tab and the other being a positive tab. The first tab 32 and the second tab 33 both are led out from the electrode body 31. For example, the first tab 32 and the second tab 33 may be led out from the same end of the electrode body 31 or from two ends of the electrode body 31, respectively. The first tab 32 is electrically connected to the end cap 2 via the first current collector 4, and the second tab 33 is electrically connected to the electrode terminal 8 via the second current collector 6.

The first current collector 4 is electrically connected to the first wall 13 by welding, such as laser welding. The first current collector 4 is connected to the inner surface of the first wall 13 by the first weld seam 41. Specifically, the first current collector 4 may adopt a thin plate structure, with the first current collector 4 being a thin plate of uniform thickness, or having localized concave, convex, bent structures and the like. For a cylindrical battery cell 100, both the first current collector 4 and the second current collector 6 may be disc-shaped.

During welding, a welding device operates from a side of the first current collector 4 away from the first wall 13. For ease of welding, the first wall 13 may be placed upside down on a work platform, and the first current collector 4 may be positioned at an appropriate location on the inner side of the first wall 13, where the first current collector 4 may be supported by the first wall 13 or other fixtures.

FIG. 4 is a schematic structural diagram of a side of the battery cell near the first wall. The first weld seam 41 does not penetrate to the outer surface of the first wall 13, in other words, the first weld seam 41 has a preset distance from the outer surface of the first wall 13, or the first weld seam 41 does not reach or extend to the outer surface of the first wall 13, or the first weld seam 41 is located only on the inner side of the outer surface of the first wall 13.

In the battery cell 100 of this embodiment, the first current collector 4 is welded to the first wall 13 from an inner side of the first wall 13, and the first weld seam 41 does not penetrate the outer surface of the first wall 13. As compared with welding from the outer side of the first wall 13 and melting through the entire thickness thereof, even if cracks appear at the first weld seam 41 after welding and cooling, the weld cracks are located on the inner side of the first wall 13, still preventing the electrolyte from leaking through the weld seam to the outside of the first wall 13, thereby improving the reliability of the battery cell 100 during use. Particularly when the first current collector 4 and the first wall 13 are made of different materials, after cooling, the significant difference in thermal expansion coefficients of the two materials causes inconsistent shrinkage of the two materials, making weld cracks more likely. The first weld seam 41 being located on the inner side of the first wall 13 can better address the electrolyte leakage issue, thus reducing material requirements for the first current collector 4 and the first wall 13.

Secondly, conventional battery cells are welded from the outside of the end cap after the electrode assembly 3 is installed. To avoid penetrating the first current collector 4, the thickness of the first current collector 4 needs to be increased, wasting material and increasing the risk of weld cracks caused by a larger amount of the material of the first current collector 4 being incorporated into the first wall 13 during welding. In contrast, in the present application, welding is performed from the inner side of the first wall 13, allowing penetration of the first current collector 4, enabling a thinner first current collector 4 while meeting current flow requirements, reducing the amount of the material of the first current collector 4 incorporated into the first wall 13, lowering the risk of weld cracks, reducing space occupation in the thickness direction of the battery cell 100, and saving material.

Thirdly, to position the first weld seam 41 on the inner side of the first wall 13 before assembling the battery cell 100, the first current collector 4 needs to be welded to the first wall 13 first. As compared with the conventional method of welding from the outside after the electrode assembly 3 is installed, this can prevent high welding temperatures from damaging the separator, and help to ensure insulation performance between the positive electrode plate and negative electrode plate, avoiding short circuits during operation of the battery cell 100, and improving the reliability of the battery cell 100 during use.

Finally, as compared with internal welding of the first current collector 4 to the side wall of the housing 1, the battery cell 100 of the present application does not require a folded edge at the outer edge of the first current collector 4, and may not require a folded edge at the outer edge of the first current collector 4, reducing space occupation in the height direction of the battery cell 100, thereby improving the energy density of the battery cell 100.

In some embodiments, the first current collector 4 and the first wall 13 are made of different materials.

For example, the main material of the first current collector 4 may be various, such as copper or aluminum. If the first current collector 4 is a positive electrode current collector, the main material is typically aluminum; and if the first current collector 4 is a negative electrode current collector, the main material is typically copper. The main material of the first wall 13 is typically aluminum, aluminum alloy, or steel. To achieve rust prevention, the outer surfaces of both the first current collector 4 and the first wall 13 may be nickel-plated.

It should be noted that the first current collector 4 and the first wall 13 being made of different materials, that is, the main component of the first current collector 4 is different from the main component of the first wall 13. For example, if both the first current collector 4 and the first wall 13 are made of single materials, the first current collector 4 and the first wall 13 are composed of different metal elements. If the first current collector 4 and the first wall 13 are made of alloy or composite materials, the main components of the first current collector 4 and the first wall 13 differ, not merely in the content of components.

If the first current collector 4 and the first wall 13 are made of different materials, after welding and cooling, the significant difference in thermal expansion coefficients of the two materials causes inconsistent shrinkage of the two materials, making weld cracks more likely. Even if cracks appear at the first weld seam 41, the cracks are located on the inner side of the first wall 13, still preventing the electrolyte from leaking through the weld seam to the outside of the first wall 13, improving the reliability of the battery cell 100 during use and reducing material selection requirements for the first current collector 4 and the first wall 13.

Optionally, the first current collector 4 and the first wall 13 are made of the same material, that is, the main component of the first current collector 4 is the same as the main component of the first wall 13. For example, if both the first current collector 4 and the first wall 13 are made of single materials, they are composed of the same metal element. If the first current collector 4 and the first wall 13 are made of alloy or composite materials, the main components of the first current collector 4 and the first wall 13 are the same. If the first current collector 4 and the first wall 13 differ only in component content, they are made of the same material. For example, low-carbon steel, medium-carbon steel, and high-carbon steel are all the same material.

In some embodiments, the first current collector 4 is a negative electrode current collector, the first current collector 4 includes a copper material, and the first wall 13 includes a steel material.

To achieve rust prevention, the outer surfaces of both the first current collector 4 and the first wall 13 may be nickel-plated. Since the main components of the first current collector 4 and the first wall 13 are different, the first current collector 4 and the first wall 13 are made of different materials.

Optionally, the first current collector 4 may also be a positive electrode current collector.

In this embodiment, during welding to form the first weld seam 41, copper atoms from the molten first current collector 4 enter the first wall 13. Due to the significant difference in thermal expansion coefficients between copper and steel, after cooling, inconsistent shrinkage of the two materials makes weld cracks more likely. However, the weld cracks are located inside the first wall 13, still preventing the electrolyte from leaking through the weld seam to the outside of the first wall 13, improving the reliability of the battery cell 100 during use.

In some embodiments, the first weld seam 41 penetrates the first current collector 4.

The first weld seam 41 penetrates the first current collector 4 and extends toward the first wall 13 to weld the first current collector 4 to the first wall 13 together.

This embodiment facilitates the welding operation, reducing process complexity. Particularly when the first current collector 4 is thin, this can enhance the connection strength between the first current collector 4 and the first wall 13, preventing fall-off during long-term operation or vibration of the battery cell 100, improving electrical connection reliability, and ensuring the operational performance of the battery cell 100.

In some embodiments, as shown in FIG. 4, at least a portion of the first current collector 4 is sandwiched between the first tab 32 and the first wall 13.

The first current collector 4 includes a first portion 44 and a second portion 45 connected to each other. For example, the first current collector 4 is disc-shaped, and although its thickness is uniform, it can be functionally divided into the first portion 44 and the second portion 45. The first portion 44 is located radially outward of the second portion 45 and is annular, with the first portion 44 configured to be welded to the first wall 13 and the second portion 45 configured to be welded to the first tab 32. Specifically, the first portion 44 is located between the first tab 32 and the first wall 13, with two side surfaces of the first portion 44 come into contact with the first tab 32 and the first wall 13, respectively.

Optionally, the first current collector 4 is only welded to the first wall 13 and is not limited by the first wall 13.

This embodiment sandwiches the first current collector 4 between the first tab 32 and the first wall 13, enabling reliable electrical connection after welding. Even if the first weld seam 41 falls off during long-term use or vibration of the battery cell 100, the first current collector 4 can maintain reliable contact with the first wall 13. Additionally, due to the limiting effect of the first wall 13, the first current collector 4 can also maintain reliable contact with the first tab 32. Therefore, this structure can enhance the reliability of the electrical connection between the first tab 32 and the first wall 13, improving the performance and reliability of the battery cell 100.

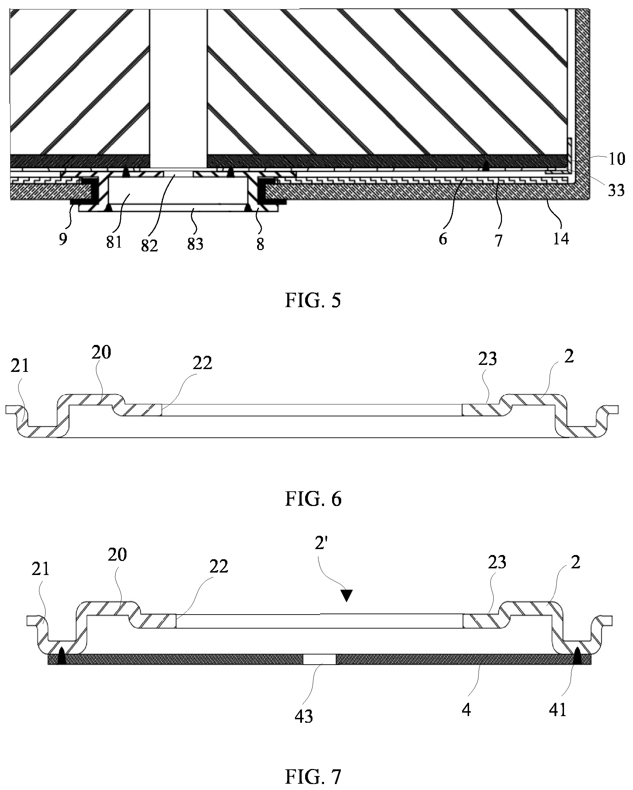

In some embodiments, as shown in FIGs. 6 and 7, the first weld seam 41 is spaced from an outer edge of the first current collector 4.

During welding, the laser first acts on the surface of the first current collector 4 away from the first wall 13. The extension trajectory of the first weld seam 41 may be a continuous or intermittent annular shape, with a single annular weld seam or at least two annular weld seams spaced radially on the first current collector 4. Alternatively, the first weld seam 41 may be configured as other linear or curved extension forms to improve the connection reliability between the first wall 13 and the first current collector 4.

Specifically, as shown in FIG. 7, the first wall 13 has a body portion 20 and a connecting portion 21. The connecting portion 21 protrudes toward the first current collector 4 relative to the body portion 20 along the thickness direction of the first wall 13, forming a U-shape, and the connecting portion 21 comes into contact with the first current collector 4. The first weld seam 41 is formed by welding the first current collector 4 to the connecting portion 21. The bottom wall of the connecting portion 21 takes the form of a flat plate to increase the contact area between the connecting portion 21 and the first current collector 4. The first portion 44 of the first current collector 4 is sandwiched between the connecting portion 21 and the first tab 32, with the first weld seam 41 penetrating the first current collector 4 and extending into the bottom wall of the connecting portion 21 without exceeding the outer surface of the bottom wall of the connecting portion 21. Preferably, the outer edge of the first current collector 4 extends to a position near the outer side wall of the U-shaped connecting portion 21 to increase the width of the weldable region.

During welding, a welding device operates from a side of the first current collector 4 away from the first wall 13. For ease of welding, the first wall 13 may be placed upside down on a work platform, and the first current collector 4 may be positioned at an appropriate location on the first wall 13, where the first current collector 4 may be supported by the first wall 13.

This embodiment facilitates increasing the width of the first weld seam 41 and can allow the first weld seam 41 to be designed with different trajectories to enhance welding strength and reliability. In addition, during laser welding, the welding device can emit laser vertically downward, reducing welding process complexity and facilitating the formation of desired trajectories by adjusting the laser position. Additionally, during welding, the first wall 13 can support the first current collector 4, eliminating the need for additional welding fixtures.

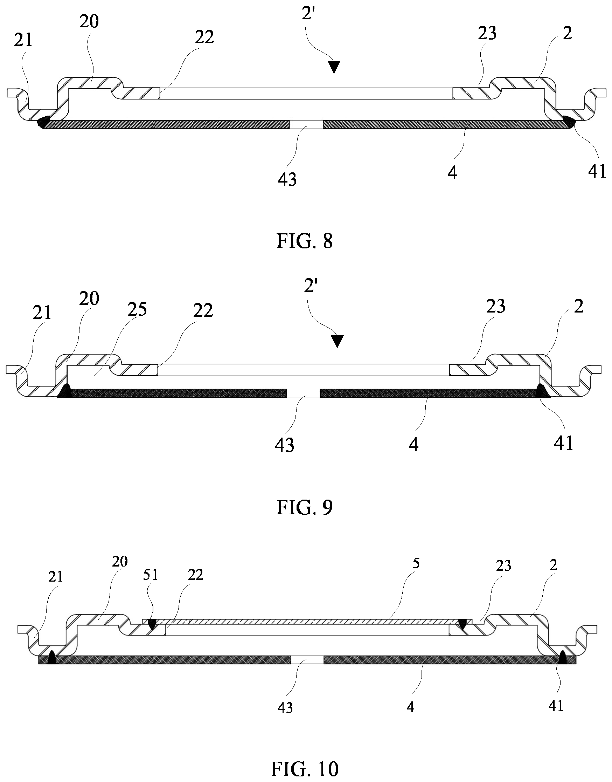

In some embodiments, as shown in FIG. 8, the first weld seam 41 is formed by welding the outer edge of the first current collector 4 to the inner surface of the first wall 13.

During welding, the laser acts on a corner region formed between the outer edge of the first current collector 4 and the inner surface of the first wall 13, achieving fillet welding. The first weld seam 41 may fully or partially penetrate the outer edge of the first current collector 4. During laser welding, the welding device may emit a laser at an angle to the first current collector 4. After welding, the first weld seam 41 may partially accumulate in the corner region formed between the outer edge of the first current collector 4 and the inner surface of the first wall 13 to increase connection strength. The first weld seam 41 may extend continuously or intermittently along the outer edge of the first current collector 4.

Specifically, as shown in FIG. 8, the first wall 13 has a body portion 20 and a connecting portion 21. The connecting portion 21 protrudes toward the first current collector 4 relative to the body portion 20 along the thickness direction of the first wall 13, forming a U-shape, and the connecting portion 21 comes into contact with the first current collector 4. The first weld seam 41 is formed by welding the first current collector 4 to the connecting portion 21. The bottom wall of the connecting portion 21 takes the form of a flat plate to increase the contact area between the connecting portion 21 and the first current collector 4. The first portion 44 of the first current collector 4 is sandwiched between the connecting portion 21 and the first tab 32, with a portion of the first weld seam 41 accumulating in the corner region formed between the side wall of the first current collector 4 and the inner surface of the bottom wall of the U-shaped connecting portion 21, and another portion extending inward from the outer side wall of the first current collector 4 and tilting within the bottom wall of the connecting portion 21 without exceeding the outer surface of the bottom wall of the connecting portion 21.

This embodiment facilitates determining the trajectory of the first weld seam 41, and performing welding directly along the outer edge of the first current collector 4 can reduce process complexity. Moreover, during welding, the first wall 13 can support the first current collector 4, eliminating the need for additional welding fixtures.

In some embodiments, the first wall 13 has a body portion 20 and a connecting portion 21. The connecting portion 21 protrudes toward the first current collector 4 along the thickness direction of the first wall 13, the connecting portion 21 comes into contact with the first current collector 4, and the first weld seam 41 is formed by welding the first current collector 4 to the connecting portion 21.

The connecting portion 21 may be of a U-shape and abut against the first current collector 4, and the bottom wall of the connecting portion 21 takes the form of a flat plate to increase the contact area between the connecting portion 21 and the first current collector 4. The connecting portion 21 may be formed by stamping the first wall 13.

For example, the first wall 13 is disc-shaped, and the connecting portion 21 may be located in a region near the outer edge of the first wall 13. The connecting portion 21 can be a continuous or intermittent annular structure, with its structure determined based on the position of the first weld seam 41.

This embodiment can allow the connecting portion 21 on the first wall 13 to abut against the first current collector 4 for welding when the first wall 13 and the first current collector 4 are spaced apart, facilitating the design of the first current collector 4 with a uniform thickness, and reducing manufacturing complexity of the first current collector 4.

In some embodiments, as shown in FIG. 9, the first wall 13 has a recessed portion 25, an inner side wall of the connecting portion 21 and an inner surface of the body portion 20 define the recessed portion 25, at least a portion of the first current collector 4 is located within the recessed portion 25, and the first weld seam 41 is formed by welding the outer edge of the first current collector 4 to the inner side wall of the connecting portion 21.

The outer edge of the first current collector 4 may come into contact with the inner side wall of the connecting portion 21, or there may be a gap between the outer edge of the first current collector 4 and the inner side wall of the connecting portion 21. The inner side wall of the connecting portion 21 is adjacent to its bottom wall and close to the central axis of the first wall 13, while the outer side wall of the connecting portion 21 is adjacent to its bottom wall and close to the outer edge of the first wall 13, with the outer side wall of the connecting portion 21 located radially outward of the inner edge of the connecting portion 21. The first current collector 4 may be partially located within the recessed portion 25 in terms of thickness or entirely located within the recessed portion 25 in terms of thickness.

During welding, the laser acts between the outer edge of the first current collector 4 and the inner side wall of the connecting portion 21, achieving butt welding. The first weld seam 41 may fully or partially penetrate the outer edge of the first current collector 4 and extend into the inner side wall of the connecting portion 21 without penetrating the outer surface of the inner side wall. The first weld seam 41 may extend continuously or intermittently along the outer edge of the first current collector 4.

During welding, since the first current collector 4 cannot be supported by the first wall 13, the first current collector 4 may be supported by a fixture.

In this embodiment, the first current collector 4 is disposed within the recessed portion 25, avoiding additional space occupation in the height direction of the battery cell 100, reducing the height of the battery cell 100 to improve energy density, and reducing the area of the first current collector 4 to save material.

In some embodiments, along the thickness direction of the first wall 13, a surface of the first current collector 4 facing toward the electrode assembly 3 is closer to the electrode assembly 3 than an inner surface of a bottom wall of the connecting portion 21.

Before welding the first tab 32 to the first current collector 4, the first tab 32 is flattened to form a welding plane with multiple layers of tabs.

In this embodiment, during the assembly of the battery cell 100, when the first tab 32 is welded to the first current collector 4, even if the outer edge of the first tab 32 extends beyond the outer edge of the first current collector 4, the first current collector 4 can maintain good contact with a flattened surface of the first tab 32, improving the reliability of the electrical connection between the first current collector 4 and the first tab 32, thereby enhancing the performance and reliability of the battery cell 100.

In some embodiments, the first weld seam 41 is formed by welding the first current collector 4 to a bottom wall of the connecting portion 21.

In one structural form, as shown in FIG. 7, the first weld seam 41 is spaced from the outer edge of the first current collector 4. The bottom wall of the connecting portion 21 takes the form of a flat plate to increase the contact area between the connecting portion 21 and the first current collector 4. The first portion 44 of the first current collector 4 is sandwiched between the connecting portion 21 and the first tab 32, with the first weld seam 41 penetrating the first current collector 4 and extending into the bottom wall of the connecting portion 21 without exceeding the outer surface of the bottom wall of the connecting portion 21. Preferably, the outer edge of the first current collector 4 extends to a position near the outer side wall of the U-shaped connecting portion 21 to increase the overlapping width between the first current collector 4 and the connecting portion 21, thereby increasing the width of the weldable region.

This structure facilitates increasing the width of the first weld seam 41 and can allow the first weld seam 41 to be designed with different trajectories to enhance welding strength and reliability. In addition, during laser welding, the welding device can emit laser vertically downward, reducing welding process complexity and facilitating the formation of desired trajectories by adjusting the laser position. Additionally, during welding, the first wall 13 can support the first current collector 4, eliminating the need for additional welding fixtures.

In another structural form, as shown in FIG. 8, the first weld seam 41 is formed by welding the outer edge of the first current collector 4 to the bottom wall of the connecting portion 21. During welding, the laser acts on a corner region formed by the outer edge of the first current collector 4 and the bottom wall of the connecting portion 21, achieving fillet welding. The first weld seam 41 may fully or partially penetrate the outer edge of the first current collector 4. During laser welding, the welding device may emit a laser at an angle to the first current collector 4. After welding, a portion of the first weld seam 41 may accumulate in the corner region formed between the outer edge of the first current collector 4 and the bottom wall of the connecting portion 21, with another portion extending inward from the outer side wall of the first current collector 4 and tilting within the bottom wall of the connecting portion 21 without exceeding the outer surface of the bottom wall of the connecting portion 21. This welding manner can increase connection strength.

This structure facilitates determining the trajectory of the first weld seam 41, and performing welding directly along the outer edge of the first current collector 4 can reduce process complexity. Moreover, during welding, the bottom wall of the connecting portion 21 can support the first current collector 4, eliminating the need for additional welding fixtures.

This embodiment can allow the bottom wall of the connecting portion 21 to provide support during welding, making the welding process more stable and reliable, eliminating the need for additional support fixtures, and reducing positioning requirements for the first current collector 4.

In some embodiments, the first current collector 4 includes a first portion 44 and a second portion 45 connected to each other, the first portion 44 being configured to be welded to the first wall 13, and the second portion 45 being configured to be welded to the first tab 32.

For example, the first current collector 4 is a disc, with the first portion 44 located radially outward of the second portion 45, and the first portion 44 being annular. The first portion 44 and the second portion 45 may be distinguished by different thicknesses or, if the first current collector 4 has a uniform thickness, by functional regions connected to different components. If the outer edge of the first current collector 4 is welded to the end cap 2 to form the first weld seam 41, the outer edge region of the first current collector 4 serves as the first portion 44. The first portion 44 and the second portion 45 are integrally formed.

This embodiment allows different portions of the first current collector 4 to be welded to the first wall 13 and the first tab 32 respectively, facilitating welding operations and ensuring welding reliability as the weld seams of the two portions do not affect each other.

In some embodiments, the thickness of the first portion 44 is less than the thickness of the second portion 45.

In this embodiment, with the thickness of the first portion 44 being less than the thickness of the second portion 45, the first portion 44 is penetrated more easily when the first portion 44 is penetrated to weld to the first wall 13, reducing the power required for laser welding and reducing the amount of the material of the first current collector 4 incorporated into the first wall 13 during welding, thereby reducing the risk of cracks at the first weld seam 41.

In some embodiments, the thickness of the first portion 44 is less than a thickness of a welding region of the first wall 13 and the first portion 44.

In this embodiment, with the thickness of the first portion 44 being less than the thickness of the welding region of the first wall 13 and the first portion 44, the first portion 44 is penetrated more easily when the first portion 44 is penetrated to weld to the first wall 13, reducing the power required for laser welding. In addition, the thicker first wall 13 can prevent the first weld seam 41 from penetrating the outer surface of the first wall 13 during welding, reducing requirements for welding precision, and lowering the risk of electrolyte leakage in the battery cell 100.

In some embodiments, the first wall 13 has a second opening 22, the second opening 22 being configured to allow a laser for welding the first current collector 4 and the first tab 32 to pass through.

The region for disposing the second opening 22 may be determined based on the welding region of the first current collector 4 and the first tab 32. The second opening 22 may be circular, elliptical, or polygonal in shape.

During assembly, the first current collector 4 is pre-welded to the first wall 13, and the electrode assembly 3 is then placed into the housing 1. At this point, the first tab 32 and the first current collector 4 are not yet welded. By providing the second opening 22 on the first wall 13, the first current collector 4 and the first tab 32 can be conveniently welded.

For example, the housing 1 further includes a side wall 12, the first wall 13 is formed by the end cap 2, and the end cap 2 is fixedly connected to the side wall 12. For this structure, the end cap 2 and the first current collector 4 are pre-welded to form an end cap assembly 2'. During assembly of the battery cell 100, the end cap assembly 2' is entirely fitted onto the first opening 11, with the first current collector 4 and the first tab 32 not yet welded at this point. By providing the second opening 22 on the end cap 2, the first current collector 4 and the first tab 32 can be conveniently welded after the end cap assembly 2' is installed.

In some embodiments, the second opening 22 shares the same central axis with the first wall 13, and the first weld seam 41 is located outside the second opening 22.

Optionally, the second opening 22 is located outside the first weld seam 41, with the second opening 22 intermittently arranged along the circumference direction of the first wall 13.

In this embodiment, the second opening 22 is provided in a central region of the first wall 13, reducing the impact on the strength of the first wall 13 and allowing flexible design of welding trajectories when welding the first current collector 4 and the first tab 32. This can enable a fully enclosed welding trajectory and help to improve the welding reliability and current flow capacity. Additionally, positioning the first weld seam 41 outside the second opening 22 can allow welding of the first current collector 4 and the first wall 13 near the outer edge in pre-welding the first current collector 4 and the first wall 13, ensuring a more reliable connection. Since the first current collector 4 is thin, this can prevent deformation of the edge region of the first current collector 4 or separation of the first current collector 4 from the first wall 13 under external forces. Moreover, for embodiments with a sealing member 5 provided at the second opening 22, during thermal runaway of the battery cell 100, gas is discharged through the first through-hole 311 at the central axis of the electrode assembly 3. Gas discharge can directly act on the sealing member 5 to enable smooth activation.

In some embodiments, as shown in FIG. 4, a second weld seam 42 is formed by welding the first current collector 4 to the first tab 32, and the second weld seam 42 does not extend beyond a projection region of the second opening 22 on the first current collector 4.

During welding, the welding device emits a laser inward through the second opening 22 from the outer side of the first wall 13, with the second weld seam 42 penetrating the first current collector 4 and extending into the first tab 32. In FIG. 4, the second weld seam 42 is merely illustrative, and its trajectory can be flexibly designed. For example, the trajectory of the second weld seam 42 may be a single annular shape, at least two concentric rings, multiple linear or curved trajectories radiating outward from the center, or a combination of the two trajectories. Annular trajectories are added to radial trajectories to improve welding reliability. In addition, the outermost radial position of the second weld seam 42 does not extend beyond a projection region of the second opening 22 on the first current collector 4 along a radial direction of the first current collector 4.

Optionally, in the case of tilted laser emission, the second weld seam 42 may also reach outside the projection region of the second opening 22 on the first current collector 4, that is, a region of the first current collector 4 shielded by the first wall 13.

This embodiment can facilitate welding with a laser perpendicular to the first current collector 4 during welding, eliminating the need to adjust the laser emission angle, reducing process complexity, and improving welding reliability and strength.

In some embodiments, as shown in FIG. 4, the battery cell 100 further includes a sealing member 5, and the sealing member 5 covers the second opening 22.

The sealing member 5 may adopt a thin plate structure, such as a 0.1 mm steel plate. For example, the sealing member 5 may be designed as circular, elliptical, or polygonal. The outer edge of the sealing member 5 overlaps the outer surface of the end cap 2, with welding performed in the overlapping region to form a third weld seam 51. Alternatively, the outer edge of the sealing member 5 cooperates with the inner side wall of the second opening 22, with welding performed in the mating region to form the third weld seam 51.

This embodiment uses the sealing member 5 to seal the second opening 22 after the first tab 32 and the first current collector 4 are welded through the second opening 22, preventing electrolyte leakage.

In some embodiments, the sealing member 5 is provided with a score, the score being configured to be broken when an internal pressure of the battery cell 100 exceeds a preset threshold, to release pressure.

In this embodiment, the sealing member 5 serves as a pressure relief component. When the internal pressure of the battery cell 100 exceeds the preset threshold, gas flows toward the sealing member 5 through a first through-hole 311, passing through a second through-hole 43 in the center of the first current collector 4 and acting on the inner surface of the sealing member 5. The score, being thinner and weaker, breaks to release pressure, improving the safety of the battery cell 100 during operation. Moreover, the pressure relief component's activation pressure can be flexibly set by adjusting the score's extension path and depth, allowing precise control of the activation pressure.

In some embodiments, the sealing member 5 is welded to the first wall 13 to form a third weld seam 51, and the third weld seam 51 is configured to be broken when an internal pressure of the battery cell 100 exceeds a preset threshold, to release pressure.

In this embodiment, the sealing member 5 serves as a pressure relief component. When the internal pressure of the battery cell 100 exceeds the preset threshold, gas flows toward the sealing member 5 through the first through-hole 311, passing through the second through-hole 43 in the center of the first current collector 4 and acting on the inner surface of the sealing member 5, causing the sealing member 5 to bulge outward, increasing stress at the third weld seam 51, and breaking the third weld seam 51 to release pressure, thereby improving the safety of the battery cell 100 during operation.

Moreover, the sealing member 5 is connected to the first wall 13 by welding, with the weak portion being the third weld seam 51. The minimum thickness of the sealing member 5 is the thickness of the plate itself, ensuring high thickness consistency across different regions, thereby making it easier to ensure the activation pressure of the sealing member 5. In addition, no localized thinning to form a score is required, reducing stress concentration and grain fracture issues. The steel at the weld seam can achieve higher strength than the base material, making it less prone to damage and allowing for breakage only under high gas pressure to release pressure.

In some embodiments, as shown in FIG. 10, a region of the first wall 13 near the second opening 22 is entirely recessed inward to form a first groove 23, and at least a portion of the sealing member 5 is located within the first groove 23.

The depth of the first groove 23 is configured such that the outer surface of the sealing member 5 does not extend beyond the outer surface of the end cap 2 adjacent to the first groove 23, or a portion of the thickness of the sealing member 5 is located within the first groove 23. A certain gap may exist between the inner side wall of the first groove 23 and the outer side wall of the sealing member 5 to facilitate installation. The opening of the first groove 23 is provided with a transition fillet.

This embodiment can reduce the protrusion height of the sealing member 5 relative to the first wall 13 by providing the first groove 23, lowering the risk of deformation or damage to the sealing member 5 caused by external forces such as collisions, thereby improving the pressure relief reliability of the battery cell 100. Additionally, when the housing 1 is placed upside down with the sealing member 5 facing downward for electrolyte filling, the housing 1 can be placed more stably.

In some embodiments, as shown in FIG. 10, the third weld seam 51 is spaced from an outer edge of the sealing member 5.

During welding, the laser first acts on the outer surface of the sealing member 5 and extends inward from the bottom wall of the first groove 23. The extension trajectory of the third weld seam 51 matches the shape of the sealing member 5.

This embodiment facilitates increasing the width of the third weld seam 51 to achieve the required activation pressure for the sealing member 5 and improve welding strength and reliability. In addition, during laser welding, the welding device can emit laser vertically downward, reducing welding process complexity.

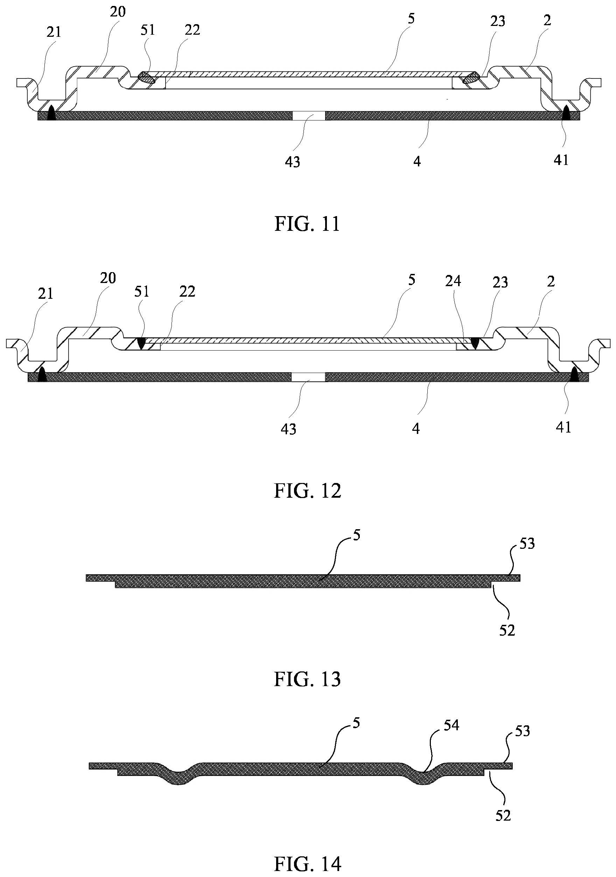

In some embodiments, as shown in FIG. 11, the third weld seam 51 is formed by welding the outer edge of the sealing member 5 to the bottom wall of the first groove 23.

During welding, the laser acts on a corner region formed between the outer edge of the sealing member 5 and the bottom wall of the first groove 23, achieving fillet welding. The third weld seam 51 may fully or partially penetrate the outer edge of the sealing member 5. During laser welding, the welding device may emit a laser at an angle to the sealing member 5. After welding, a portion of the third weld seam 51 accumulates in the corner region formed between the outer edge of the sealing member 5 and the bottom wall of the first groove 23, with another portion extending inward from the outer side wall of the sealing member 5, and tilting within the bottom wall of the first groove 23 without exceeding the bottom wall of the first groove 23, so as to increase connection strength. The third weld seam 51 extends continuously along the outer edge of the sealing member 5.

This embodiment facilitates determining the trajectory of the third weld seam 51, and performing welding directly along the outer edge of the sealing member 5 can reduce process complexity. Moreover, a portion of the third weld seam 51 accumulates in the corner region formed between the outer edge of the sealing member 5 and the bottom wall of the first groove 23, improving welding reliability and strength.

In some embodiments, as shown in FIG. 12, the bottom wall of the first groove 23 is provided with a second groove 24, the sealing member 5 is disposed within the second groove 24, and the third weld seam 51 is formed by welding the outer edge of the sealing member 5 to a side wall of the second groove 24.

The outer edge of the sealing member 5 may abut against the inner side wall of the second groove 24, or there may be a gap between the outer edge of the sealing member 5 and the inner side wall of the second groove 24.

During welding, the laser acts between the outer edge of the sealing member 5 and the inner side wall of the second groove 24, achieving butt welding. The third weld seam 51 may penetrate the outer edge of the sealing member 5 and extend into the bottom wall of the second groove 24. The third weld seam 51 may extend continuously along the outer edge of the sealing member 5.

This embodiment places the sealing member 5 within the second groove 24, allowing the sealing member 5 to be further recessed relative to the outer surface of the first wall 13, preventing deformation or damage to the sealing member 5 caused by external forces such as collisions, thereby improving the pressure relief reliability of the battery cell 100.

In some embodiments, as shown in FIG. 13, an outer periphery of the sealing member 5 is provided with a thinned portion 53, and the thinned portion 53 overlaps with the first wall 13.

The sealing member 5 may achieve thinning by removing material from the outer surface or inner surface, or achieve thinning by removing material from both the outer surface and inner surface.

This embodiment provides the thinned portion 53 at the outer periphery of the sealing member 5, facilitating penetration of the thinned portion 53 during welding, and improving welding strength and reliability. In addition, the locally thinned edge and thicker central portion of the sealing member 5 can enhance overall strength, preventing deformation due to gas production inside the battery cell 100.

In some embodiments, a third groove 52 is provided at a region near an outer edge of an inner surface of the sealing member 5, so as to form the thinned portion 53 at the outer edge of the sealing member 5.

The thinned portion 53 overlaps a position of the outer surface of the first wall 13 adjacent to the second opening 22. In FIG. 12, if the sealing member 5 shown in FIG. 13 is installed, the thinned portion 53 overlaps the bottom wall of the third groove 52, with the portion of the sealing member 5 inside the thinned portion 53 embedded within the second opening 22. The thinned portion 53 may be achieved by localized upsetting.

This embodiment facilitates cooperation between the thicker central portion of the sealing member 5 and the second opening 22 for positioning, eliminating the need for additional positioning during welding the sealing member 5, preventing misalignment of the sealing member 5 during welding, and improving welding reliability.

In some embodiments, as shown in FIG. 14, the sealing member 5 is provided with a reinforcing rib 54, and the reinforcing rib 54 protrudes toward the first current collector 4.

The reinforcing rib 54 may be achieved by stamping the end cap 2. The reinforcing rib 54 may be an annular structure protruding toward the first current collector 4 along the circumference direction of the sealing member 5. The cross-section of the reinforcing rib 54 may be arc-shaped.

This embodiment can enhance the overall strength of the sealing member 5 by providing the reinforcing rib 54 on the sealing member 5, preventing deformation caused by external forces or gas production inside the battery cell 100. In addition, the reinforcing rib 54 protruding toward the first current collector 4 can prevent deformation or damage to the sealing member 5 caused by external forces to the reinforcing rib 54 such as collisions.

In some embodiments, as shown in FIGs. 3 and 5, the electrode assembly 3 further includes a second tab 33, and the second tab 33 and the first tab 32 are led out from two ends of the electrode body 31 respectively.

Optionally, the second tab 33 and the first tab 32 may alternatively extend from the same end of the electrode body 31, with the sealing member 5 correspondingly located on the second wall 14 opposite the first wall 13 of the housing 1.

This embodiment has the second tab 33 and the first tab 32 led out from the two ends of the electrode body 31 respectively, conveniently utilizing the second opening 22 on the first wall 13 to weld the sealing member 5, and resulting in a simple structure. Additionally, this can increase the connection area between the tab on each side and the current collector, improving current flow capacity and optimizing the performance of the battery cell 100.

In some embodiments, the battery cell 100 further includes an electrode terminal 8 and a second current collector 6, where the housing 1 further includes a side wall 12 and a second wall 14 disposed opposite the first wall 13, the electrode terminal 8 is insulatedly disposed on the second wall 14, and the electrode terminal 8 is electrically connected to the second tab 33 via the second current collector 6.

The electrode terminal 8 is insulated from the second wall 14 by a first insulating member 9 which can seal the opening for installing the electrode terminal 8. The outer surface of the electrode terminal 8 is provided with a fourth groove 81, the bottom wall of the fourth groove 81 is provided with an electrolyte injection hole 82, the second current collector 6 is welded to the second tab 33, and the bottom wall of the fourth groove 81 is welded to the second current collector 6. After electrolyte injection, the fourth groove 81 is sealed by a cover plate 83. An insulating plate 7 may be provided on the inner surface of the second wall 14 to achieve insulation between the second current collector 6 and the second wall 14. Additionally, the second tab 33 and the second current collector 6 may be wrapped by an L-shaped second insulating member 10 to achieve insulation from the housing 1.

This embodiment provides the electrode terminal 8 on the second wall 14 of the housing 1, allowing convenient electrical connection to the electrode terminal 8 and the end cap 2 respectively when the second tab 33 and the first tab 32 are led out from the two ends of the electrode body 31.

In some embodiments, the housing 1 includes a container 1' and an end cap 2, the end cap 2 is fixedly connected to a first opening 11 of the container 1', and the first wall 13 is the end cap 2.

The housing 1 may include a side wall 12, a first wall 13, and a second wall 14, and the first wall 13 and the second wall 14 are connected to two ends of the side wall 12, respectively. The side wall 12 is a side wall of the container 1', and the first wall 13 is the end cap 2. If an end of the container 1' opposite the first opening 11 is a closed structure, the second wall 14 may be integrally formed with the side wall 12. If the end of the container 1' opposite the first opening 11 is provided with an opening which can be sealed by an end cap, and the second wall 14 is also an end cap.

The first current collector 4 is connected to the inner surface of the end cap 2 by a first weld seam 41. During welding, the welding device operates from the side of the first current collector 4 away from the end cap 2. For ease of welding, the end cap 2 may be placed upside down on a work platform, and the first current collector 4 is positioned at an appropriate location on the first wall 13. The first current collector 4 may be supported by the end cap 2 or other fixtures.

This embodiment can allow the first current collector 4 and the end cap 2 to be pre-welded to form an end cap assembly 2' during assembly of the battery cell 100, unlike the conventional method of welding an end cap to a current collector from the outside after the end cap is installed. In addition, even if cracks appear at the first weld seam 41 after welding and cooling, the weld cracks are located on the inner side of the end cap 2, still preventing the electrolyte from leaking through the weld seam to the outside of the end cap 2, improving the reliability of the battery cell 100 during use. Particularly when the first current collector 4 and the end cap 2 are made of different materials, after cooling, the significant difference in thermal expansion coefficients of the two materials causes inconsistent shrinkage of the two materials, making weld cracks more likely. The first weld seam 41 being located on the inner side of the end cap 2 can better address the electrolyte leakage issue, reducing material requirements for the first current collector 4 and the end cap 2. Additionally, pre-welding the first current collector 4 and the end cap 2 eliminates the need for welding operations inside the cavity of the housing 1, reducing welding difficulty and facilitating operation.

The structure and assembly method of the battery cell 100 of the present application are described below through a specific embodiment.

As shown in FIGs. 3 and 4, a battery cell 100 is cylindrical and includes: a housing 1, an electrode assembly 3, a first current collector 4, a sealing member 5, a second current collector 6, and an electrode terminal 8. The housing 1 includes a container 1' and an end cap 2, the container 1' has a first opening 11, and the end cap 2 is configured to cover the first opening 11. A second opening 22 is provided at the central axis of the end cap 2, the second opening 22 is sealed by the sealing member 5, and a third weld seam 51 is formed between the sealing member 5 and the end cap 2. The end cap 2 includes a body portion 20 and a connecting portion 21, the connecting portion 21 protrudes toward the first current collector 4 relative to the body portion 20 along a thickness direction of the end cap 2, and the connecting portion 21 is located near the outer edge of the end cap 2 and disposed along the entire circumference direction of the end cap 2, with the cross-section of the connecting portion 21 being U-shaped and protruding overall toward the first current collector 4.

The electrode assembly 3 includes an electrode body 31, and a first tab 32 and a second tab 33 that are led out from two ends of the electrode body 31. For example, the first tab 32 and the second tab 33 may be closed annular structures, or rectangular or fan-shaped structures spaced along the circumference direction of the electrode body 31. The first current collector 4 may be a circular thin disc, and sandwiched between the connecting portion 21 and the first tab 32. A first weld seam 41 is formed by welding the first current collector 4 to the connecting portion 21, and the first weld seam 41 does not penetrate the outer surface of the end cap 2. Regions of the first current collector 4 and the body portion 20 located radially inward of the connecting portion 21 are spaced along the height direction of the battery cell 100. The center of the electrode body 31 is provided with a first through-hole 311, and a central region of the first current collector 4 is provided with a second through-hole 43 for discharging gas to act on the sealing member 5 during thermal runaway of the battery cell 100. The electrode terminal 8 is insulatedly disposed on the second wall 14. The electrode terminal 8 is electrically connected to the second tab 33 via the second current collector 6. The outer surface of the electrode terminal 8 is provided with a fourth groove 81, the bottom wall of the fourth groove 81 is provided with an electrolyte injection hole 82, the second current collector 6 is welded to the second tab 33, and the bottom wall of the fourth groove 81 is welded to the second current collector 6. After electrolyte injection, the fourth groove 81 is sealed by a cover plate 83.

During assembly of the battery cell 100, first, the end cap 2 and the first current collector 4 are welded from a side of the first current collector 4 to form an end cap assembly 2'. Next, the electrode terminal 8 is installed on the second wall 14 of the housing 1, the electrode terminal 8 is insulated from the second wall 14 by a first insulating member 9, and an insulating plate 7 is installed on the inner surface of the second wall 14. Then, the second current collector 6 is welded to the second tab 33, and an L-shaped second insulating member 10 is wrapped around the positions of the electrode assembly 3 and the second current collector 6, and then placed into the housing 1. Next, the end cap assembly 2' is fitted onto the first opening 11, the outer edge of the end cap 2 is welded to the first opening 11 of the container 1', and the first current collector 4 is welded to the first tab 32 through the second opening 22, with the order of these two welding steps being interchangeable. Then, the sealing member 5 is welded. Finally, the housing 1 is placed upside down, the electrode terminal 8 is welded to the second current collector 6, and sealing is performed through the cover plate 83 after the electrolyte is injected through the electrolyte injection hole 82.

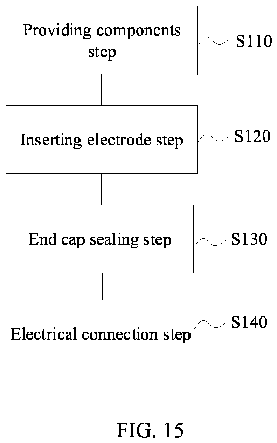

Secondly, the present application provides a manufacturing method of a battery cell, as shown in FIG. 15, in some embodiments, including:
S110. Providing components step: provide a container 1', an end cap assembly 2', and an electrode assembly 3, where the electrode assembly 3 includes an electrode body 31 and a first tab 32, the first tab 32 is led out from the electrode body 31, the end cap assembly 2' includes an end cap 2 and a first current collector 4, the first current collector 4 is connected to an inner surface of the end cap 2 by a first weld seam 41, and the first weld seam 41 does not penetrate to an outer surface of the end cap 2.
S120. Inserting electrode step: insert the electrode assembly 3 into the container 1' through a first opening 11 of the container 1'.
S130. End cap sealing step: cover the first opening 11 with the end cap assembly 2'.
S140. Electrical connection step: electrically connect the first current collector 4 to the first tab 32.
S110-S140 are performed sequentially.

In the battery cell 100 of this embodiment, the first current collector 4 is welded to the end cap 2 from an inner side of the end cap 2, and the first weld seam 41 does not penetrate the outer surface of the end cap 2. As compared with welding from the outer side of the end cap 2 and melting through the entire thickness thereof, even if cracks appear at the first weld seam 41 after welding and cooling, the weld cracks are located on the inner side of the end cap 2, still preventing the electrolyte from leaking through the weld seam to the outside of the end cap 2, improving the reliability of the battery cell 100 during use. Particularly when the first current collector 4 and the end cap 2 are made of different materials, after cooling, the significant difference in thermal expansion coefficients of the two materials causes inconsistent shrinkage of the two materials, making weld cracks more likely. The first weld seam 41 being located on the inner side of the end cap 2 can better address the electrolyte leakage issue, thus reducing material requirements for the first current collector 4 and the end cap 2.

In some embodiments, the end cap 2 has a second opening 22, and the electrical connection step S140 includes:
welding the first current collector 4 to the first tab 32 by using a laser through the second opening 22.

In this embodiment, the second opening 22 forms a passage for laser welding the first current collector 4 and the first tab 32. Since the end cap 2 and the first current collector 4 are pre-welded to form the end cap assembly 2', during assembly of the battery cell 100, the end cap assembly 2' is entirely fitted onto the first opening 11, with the first current collector 4 and the first tab 32 not yet welded at this point. By providing the second opening 22 on the end cap 2, the first current collector 4 and the first tab 32 can be conveniently welded after the end cap assembly 2' is installed.

In some embodiments, the end cap assembly 2' further includes a sealing member 5, and after the negative electrode electrical connection step S140, the manufacturing method further includes:
covering the second opening 22 with the sealing member 5 and welding the sealing member 5 to the end cap 2 to form a third weld seam 51.

The sealing member 5 may cover the second opening 22 from an outer side of the end cap 2, and the third weld seam 51 is configured to be broken when an internal pressure of the battery cell 100 exceeds a preset threshold, to release pressure.

In this embodiment, the second opening 22 may be configured to weld the first tab 32 and the first current collector 4, and after welding, the second opening 22 is sealed by welding the sealing member 5 to achieve sealing of the housing 1.

In some embodiments, after the end cap sealing step S130, the manufacturing method further includes:
connecting an outer edge of the end cap 2 to the container 1' at the first opening 11.

The execution order of this step and the negative electrode electrical connection step S140 may be interchangeable. If the end cap 2 is connected to the container 1' first, reliable contact between the first current collector 4 and the first tab 32 can be ensured before performing the negative electrode electrical connection step S140, improving the reliability of the electrical connection between the first current collector 4 and the first tab 32. If the negative electrode electrical connection step S140 is performed first, followed by connecting the end cap 2 to the container 1', the first current collector 4 and the first tab 32 can be welded under an appropriate contact pressure. The gap between the outer edge of the end cap 2 and the first opening 11 of the container 1' can be compensated by a weld seam, avoiding excessive pressure from the end cap assembly 2' on the first tab 32 and reducing deformation of the first tab 32.

For example, as shown in FIG. 4, the end cap 2 may overlap the end of the container 1', and the outer edge of the end cap 2 is welded to the end of the container 1' from the side. The end cap 2 includes a connecting portion 21, and the connecting portion 21 protrudes toward the first current collector 4, forming a U-shaped structure. The outer side wall of the connecting portion 21 cooperates with the side wall 12 of the container 1' for positioning.

In this embodiment, the container 1' is reliably sealed with the end cap 2, preventing the electrolyte from leaking at the connection between the end cap 2 and the container 1'.

Although the present application has been described with reference to preferred embodiments, various improvements can be made, and components therein can be replaced with equivalents without departing from the scope of the present application. In particular, as long as there is no structural conflict, the technical features mentioned in the various embodiments can be combined in any manner. The present application is not limited to the specific embodiments disclosed herein but includes all technical solutions falling within the scope of the claims.

## Claims

1. A battery cell comprising:
a housing (1), comprising a first wall (13);
an electrode assembly (3) disposed within the housing (1), wherein the electrode assembly (3) comprises an electrode body (31) and a first tab (32), and the first tab (32) is led out from the electrode body (31); and
a first current collector (4), configured to electrically connect the first tab (32) and the first wall (13), wherein the first current collector (4) is connected to an inner surface of the first wall (13) by a first weld seam (41), and the first weld seam (41) does not penetrate to an outer surface of the first wall (13).

2. The battery cell according to claim 1, wherein the first weld seam (41) penetrates the first current collector (4).

3. The battery cell according to claim 1 or 2, wherein at least a portion of the first current collector (4) is sandwiched between the first tab (32) and the first wall (13).

4. The battery cell according to claim 3, wherein the first weld seam (41) is spaced from an outer edge of the first current collector (4).

5. The battery cell according to claim 3, wherein the first weld seam (41) is formed by welding the outer edge of the first current collector (4) to the inner surface of the first wall (13).

6. The battery cell according to any one of claims 1 to 3, wherein the first wall (13) has a body portion (20) and a connecting portion (21), the connecting portion (21) protrudes toward the first current collector (4) relative to the body portion (20) along a thickness direction of the first wall (13), the connecting portion (21) comes into contact with the first current collector (4), and the first weld seam (41) is formed by welding the first current collector (4) to the connecting portion (21).

7. The battery cell according to claim 6, wherein the first wall (13) comprises a recessed portion (25), an inner side wall of the connecting portion (21) and an inner surface of the body portion (20) define the recessed portion (25), at least a portion of the first current collector (4) is located within the recessed portion (25), and the first weld seam (41) is formed by welding an outer edge of the first current collector (4) and the inner side wall of the connecting portion (21).

8. The battery cell according to claim 7, wherein along the thickness direction of the first wall (13), a surface of the first current collector (4) facing toward the electrode assembly (3) is closer to the electrode assembly (3) than an inner surface of a bottom wall of the connecting portion (21).

9. The battery cell according to claim 6, wherein the first weld seam (41) is formed by welding the first current collector (4) to a bottom wall of the connecting portion (21).

10. The battery cell according to any one of claims 1 to 9, wherein the first current collector (4) comprises a first portion (44) and a second portion (45) connected to each other, the first portion (44) is configured to be welded to the first wall (13), and the second portion (45) is configured to be welded to the first tab (32).

11. The battery cell according to claim 10, wherein a thickness of the first portion (44) is less than a thickness of the second portion (45).

12. The battery cell according to claim 10 or 11, wherein the thickness of the first portion (44) is less than a thickness of a welding region of the first wall (13) and the first portion (44).

13. The battery cell according to any one of claims 1 to 12, wherein the first current collector (4) and the first wall (13) are made of different materials.

14. The battery cell according to any one of claims 1 to 13, wherein the first current collector (4) is a negative electrode current collector, the first current collector (4) comprises a copper material, and the first wall (13) comprises a steel material.

15. The battery cell according to any one of claims 1 to 14, wherein the first wall (13) has a second opening (22), the second opening (22) being configured to allow a laser for welding the first current collector (4) and the first tab (32) to pass through.

16. The battery cell according to claim 15, wherein the second opening (22) shares a same central axis with the first wall (13), and the first weld seam (41) is located outside the second opening (22).

17. The battery cell according to claim 15 or 16, wherein a second weld seam (42) is formed by welding the first current collector (4) to the first tab (32), the second weld seam (42) not extending beyond a projection region of the second opening (22) on the first current collector (4).

18. The battery cell according to any one of claims 15 to 17, further comprising a sealing member (5), wherein the sealing member (5) covers the second opening (22).

19. The battery cell according to claim 18, wherein the sealing member (5) is provided with a score, and the score is configured to be broken when an internal pressure of the battery cell (100) exceeds a preset threshold, to release pressure.

20. The battery cell according to claim 18, wherein the sealing member (5) is welded to the first wall (13) to form a third weld seam (51), and the third weld seam (51) is configured to be broken when an internal pressure of the battery cell (100) exceeds a preset threshold, to release pressure.

21. The battery cell according to claim 20, wherein the third weld seam (51) is spaced from an outer edge of the sealing member (5).

22. The battery cell according to claim 20, wherein a region of the first wall (13) near the second opening (22) is recessed inward to form a first groove (23), and at least a portion of the sealing member (5) is located within the first groove (23).

23. The battery cell according to claim 22, wherein the third weld seam (51) is formed by welding an outer edge of the sealing member (5) to a bottom wall of the first groove (23).

24. The battery cell according to claim 22, wherein a bottom wall of the first groove (23) is provided with a second groove (24), the sealing member (5) is disposed within the second groove (24), and the third weld seam (51) is formed by welding an outer edge of the sealing member (5) to a side wall of the second groove (24).

25. The battery cell according to any one of claims 18 to 24, wherein an outer periphery of the sealing member (5) is provided with a thinned portion (53), and the thinned portion (53) overlaps with the first wall (13).

26. The battery cell according to claim 25, wherein a third groove (52) is provided at a region near an outer edge of an inner surface of the sealing member (5), so as to form the thinned portion (53) at the outer edge of the sealing member (5).

27. The battery cell according to any one of claims 18 to 26, wherein the sealing member (5) is provided with a reinforcing rib (54), and the reinforcing rib (54) protrudes toward the first current collector (4).

28. The battery cell according to any one of claims 1 to 27, wherein the electrode assembly (3) further comprises a second tab (33), and the second tab (33) and the first tab (32) are led out from two ends of the electrode body (31) respectively.

29. The battery cell according to claim 28, further comprising an electrode terminal (8) and a second current collector (6), wherein the housing (1) further comprises a side wall (12) and a second wall (14) disposed opposite the first wall (13), the electrode terminal (8) is insulatedly disposed on the second wall (14), and the electrode terminal (8) is electrically connected to the second tab (33) via the second current collector (6).

30. The battery cell according to any one of claims 1 to 29, wherein the housing (1) comprises a container (1') and an end cap (2), the end cap (2) is fixedly connected to a first opening (11) of the container (1'), and the first wall (13) is the end cap (2).

31. A battery comprising the battery cell (100) according to any one of claims 1 to 30.

32. An electric apparatus comprising the battery cell (100) according to any one of claims 1 to 30 and/or the battery (200) according to claim 31, configured to provide electric energy to the electric apparatus.

33. A manufacturing method of a battery cell, comprising:
providing components step: providing a container (1'), an end cap assembly (2'), and an electrode assembly (3), wherein the electrode assembly (3) comprises an electrode body (31) and a first tab (32), the first tab (32) is led out from the electrode body (31), the end cap assembly (2') comprises an end cap (2) and a first current collector (4), the first current collector (4) is connected to an inner surface of the end cap (2) by a first weld seam (41), and the first weld seam (41) does not penetrate to an outer surface of the end cap (2);
inserting electrode step: inserting the electrode assembly (3) into the container (1') through a first opening (11) of the container (1');
end cap covering step: covering the first opening (11) with the end cap assembly (2'); and
electrical connection step: electrically connecting the first current collector (4) to the first tab (32).

34. The manufacturing method according to claim 33, wherein the end cap (2) has a second opening (22), and the electrical connection step comprises:
welding the first current collector (4) to the first tab (32) by using a laser through the second opening (22).

35. The manufacturing method according to claim 34, wherein the end cap assembly (2') further comprises a sealing member (5), and after the electrical connection step, the manufacturing method further comprises:
covering the second opening (22) with the sealing member (5) and welding the sealing member (5) to the end cap (2) to form a third weld seam (51).

36. The manufacturing method according to any one of claims 33 to 35, wherein after the end cap sealing step, the manufacturing method further comprises:
connecting an outer edge of the end cap (2) to the container (1') at the first opening (11).
